(19) Europäisches Patentamt
European Patent Office
Office européen des brevets

(11) EP 0 778 855 B1

## (12) EUROPEAN PATENT SPECIFICATION

(45) Date of publication and mention
of the grant of the patent:
**16.06.1999 Bulletin 1999/24**

(21) Application number: **95900481.3**

(22) Date of filing: **01.11.1994**

(51) Int Cl.$^6$: **C08G 18/48**, C08G 18/66

(86) International application number:
**PCT/US94/12469**

(87) International publication number:
**WO 96/06875 (07.03.1996 Gazette 1996/11)**

(54) **HYDROPHILIC POLYURETHANE**

HYDROPHYLES POLYURETHAN

POLYURETHANE HYDROPHILE

(84) Designated Contracting States:
**DE FR GB IT NL SE**

(30) Priority: **01.09.1994 US 299394**

(43) Date of publication of application:
**18.06.1997 Bulletin 1997/25**

(73) Proprietor: **W.L. GORE & ASSOCIATES, INC.
Newark, Delaware 19714-9206 (US)**

(72) Inventors:
• **DELANEY, Pamela, J.
Hockessin, DE 19707 (US)**
• **LEONE, Shaun
Elkton, MD 21921 (US)**

(74) Representative:
**Klunker . Schmitt-Nilson . Hirsch
Winzererstrasse 106
80797 München (DE)**

(56) References cited:
**EP-A- 0 404 517          EP-A- 0 519 314
WO-A-91/09906          GB-A- 1 156 784
US-A- 3 901 852          US-A- 4 532 316**

Remarks:
The file contains technical information submitted after the application was filed and not included in this specification

**Description**

## FIELD OF THE INVENTION

This invention relates to a breathable, elastomeric, thermoplastic liquid-waterproof polyurethane of very good toughness and tensile strength.

## BACKGROUND OF THE INVENTION

Polyurethanes are prepared from an isocyanate, a polyol and a chain extender. Depending on the equivalency ratios of the reactants, the processing techniques and the properties can be varied.

Thermoplastic polyurethanes are of two types. One type is prepared by the reaction of essentially equivalents of isocyanate and active hydrogen functionality, so that little crosslinking occurs after formation of the polymer. The other type is slightly crosslinkable due to an excess of isocyanate groups. This invention is concerned with the former.

Historically, it has been difficult to obtain desirable physical characteristics such as tensile strength, elongation, tear strength, toughness and the like in highly hydrophilic polymeric coatings, especially if the polymer swells in solvents.

U.S. Patent 4,273,911 discloses low melt temperature processible thermoplastic polyurethanes prepared by employing two melt point lowering diol chain extenders and a strength enhancing diol.

Breathable polyurethanes, i.e., ones that have the ability to transport water molecules through them are made using a polyol of polyoxyethylene, such as are disclosed in U.S. Patent 3,164,565, and U.S.P. 3,901,852.

U.S. Patent 4,367,327 discloses a film of polyoxyethylene polyurethane which provides breathability, but a compromise is made for breathability and elastomeric properties.

U.S. Patent 4,532,316 teaches reactive, segmented polyurethane prepolymers that can be breathable, especially when employing a polyol of polyoxyethylene. The prepolymer is melt-processible at low temperatures and has good water vapor transmission rates. In these polymers the chain extender is present in lesser ratios than the other ingredients.

EP-A-404 517 discloses a hydrophilic thermoplastic polyurethane having a hard segment contain of 45 %, which is obtained by reacting MDI, 1,4 butanediol and a polyoxyethyleneglycol having a molecular weight of 1450. The equivalent ratio of the starting components MDI, PEG and BDO is 3,775/1/2,694.

It is an object of this invention to achieve even better polyurethanes in terms of strength including wet strength, and in terms of breathability, and low swell properties.

## SUMMARY OF THE INVENTION

The invention is achieved by a polyurethane that is the reaction product of 4,4'-diphenylmethane diisocyanate (MDI), poly(oxyethylene) glycol (PEG), and 1,4-butane diol (BDO). The equivalents of each reactant in the polyurethane is 4:1:3. The amount of hard segment (made up of chain extender and MDI) is 46 weight percent.

This polymer is unexpectedly strong, especially with regard to toughness (wet or dry), and tensile strength. The polymer is breathable, elastomeric, and has good hand and low swell. It is useful as a fabric coating in imparting durability to fabrics while maintaining good breathability. It is also useful as a water vapor permeable adhesive, or a permeable membrane, or the like.

By "breathable" is meant that the polymer transports water vapor molecules through the polymer.

By "elastomeric" is meant that the polymer film can be stretched and upon release of the stretching force retracts to approximately its original shape.

## BRIEF DESCRIPTION OF THE DRAWINGS

Figure 1 is a graph comparing the toughness of the Example 1 sample of the invention with comparisons described below.

Figures 2 and 3 are bar charts comparing wet and dry tensile strength values (Figure 2) and toughness values (Figure 3) of the Example 1 sample with the comparisons.

## DETAILED DESCRIPTION OF THE INVENTION

It has unexpectedly been discovered that when MDI/PEG/BDO is employed in the polyurethane in a 4:1:3 ratio and the hard segments comprise 46 weight percent of the polyurethane, the polymer has an unusually high tensile strength, toughness, and low swell while maintaining high moisture vapor permeablity, and has good wet strength properties. A polymer fulfilling this description is a 4:1:3 equivalent ratio made of MDI/PEG 1450/BDO having a percentage of hard segments of 46 weight percent. PEG 1450 is polyethylene glycol having an average molecular weight of 1489; e.g "Carbowax" Brand "Sentry" Polyethylene glycol 1450 from Union Carbide.

It is well known that polyurethanes have hard and soft segments. The hard segments are made up of units of MDI and BDO. The soft segments are the PEG units. Degree of breathability is controlled by the amount of PEG present in the polymer, and increases as the amount of PEG increases. PEG also imparts resistance to hydrolysis and fungus, and imparts good flexibility at low temperature. The BDO is a chain extender (CE) which increase the chain length and molecular weight of the polymer.

The polymer can be synthesized by conventional procedures. Two convenient procedures are the "prepolymer" method and the "one-step" method. In the former MDI is ordinarily preheated to 50 - 70°C, preferably 50°C, and then polyethylene glycol (PEG) 1450 (that has been degassed) added at a 4:1 MDI/PEG ratio. The reactor is sealed under an inert atmosphere such as nitrogen, and the mixture stirred for a time and temperature to permit reaction of the MDI and PEG. Then the chain extender is rapidly added at 50-90°C in an amount to make the 4:1:3 ratio. Stirring was continued until the mixture begins to thicken. It is poured in a container, sealed under nitrogen and stored.

In the "one-step" procedure, the PEG and the BDO can be weighed in a reaction vessel at a ratio of 1:3 and stirred. 4 parts of MDI can then be rapidly added and the vessel contents stirred. The reaction mass will thicken and heat will evolve. The container mixture can then be closed under nitrogen, sealed and the mixture stored.

It may be desirable, but not essential. to include a catalyst in the reaction mixture employed to prepare the prepolymers of this invention. Any of the catalysts conventionally employed in the art to catalyze the reaction of an isocyanate with a compound containing an active hydrogen can be employed for this purpose. The amount of catalyst employed is generally within the range of about 0.02 to about 2.0 percent by weight of the reactants.

The polymers can be comminuted into a more workable form. To make films, the polymer can be dissolved in a solvent, such as N-methyl-2-pyrrolidinone (NMP), N,N-dimethyl formamide, tetrahydrofuran (THF), phenol, or dimethyl sulfoxide, and then cast onto a flat substrate. Alternatively, the polymer, being thermoplastic, can simply be extruded into a desired form.

The polymer can also be coated or laminated onto a substrate from solution or can be extrusion coated onto the substrate. Being thermoplastic, the polymers can be extruded without having to use a solvent. Substrates that can be coated include fabrics, and porous or nonporous films or membranes, such as textiles, polymeric membranes, papers, paddings and the like. One such membrane is stretched porous polytetrafluoroethylene which has a microstructure of nodes interconnected with fibrils.

The polymers can also be applied as an adhesive to bind together two substrates described above.

If desired, the polymers of this invention can have incorporated in them, at any appropriate stage of preparation, additives such as pigments, fillers, lubricants, stabilizers, antioxidants, coloring agents, fire retardants and the like, which are commonly used in conjunction with polyurethane elastomers. The same care must be taken to ensure low moisture levels of the additives as appropriate in conventional polyurethane prepolymer technology.

## WATER VAPOR TRANSMISSION RATE (MVTR)

In the procedure, approximately 70 ml. of a solution consisting of 35 parts by weight of potassium acetate and 15 parts by weight of distilled water was placed into a 133 ml. polypropylene cup, having an inside diameter of 6.5 cm. at its mouth. A PTFE membrane having a MVTR of approximately 34,200 g/[m$^2$·24 h] as tested by the method described in U.S. Patent 4,862,730 to Crosby and available from W. L. Gore & Associates, Inc. of Newark, Delaware, was heat sealed to the lip of the cup to create a taut, leakproof, microporous barrier containing the solution.

A similar expanded PTFE membrane was mounted to the surface of a water bath. The water bath assembly was controlled at 23°C plus or minus 0.2°C, utilizing a temperature controlled room and a water circulating bath.

The sample to be tested was allowed to condition at a temperature of 23°C and a relative humidity of 50% prior to performing the test procedure. Samples were placed so the sample was in contact with the expanded polytetrafluoroethylene membrane mounted to the surface of the water bath and allowed to equilibrate 30 minutes prior to the introduction of the cup assembly.

The cup assembly was weighed to the nearest 1/1000g, and was placed in an inverted manner onto the center of the test sample.

Water transport was provided by the driving force between the water in the water bath and the saturated salt solution providing water flux by diffusion in that direction. The sample was tested for 15 minutes and the cup assembly was then removed, weighed again within 1/1000g.

The MVTR of the sample was calculated from the weight gain of the cup assembly and was expressed in grams of water per square meter of sample surface area per 24 hours.

## TENSILE PROPERTIES

Tensile tests were performed according to ASTM D882-88, Method A, with the following two exceptions:

1. the distance between the grips as was stated in Section 10.3 was changed to 25.40 mm (1 inch); and
2. the crosshead speed was 254 mm/minute (10 inches/minute).

The values specified in Table 2 of the ASTM were not used. The Instron testing machine used was Model 1122, equipped with a strip chart recorder. All samples were tested using a 22.68 kg (50 lb.) load cell.

The scope of this method states that this method covers the determination of tensile properties of plastics in the form of thin sheeting, including film less than 1.016 mm (0.04 inches) in thickness. Method A is the Static Weighing -Constant-Rate-Of-Grip Separation Test, which employs a constant rate of separation of the grips holding the ends of the test specimen. Toughness refers to the Tensile Energy to Break (TEB) as defined in Section 3.4 of this method. Toughness is used to evaluate materials that may be subjected to heavy abuse.

Test specimens were cut using a razor in accordance with Section 5 and other considerations set forth in Section 6. Conditioning was done as explained in Section 7, with the exception of the wet specimen testing. Wet tensile tests were performed using ASTM D882-88 Method A (with exceptions as noted above) on samples that had been conditioned in distilled water for 24 hours at ambient temperature.

All calculations for both the wet and dry specimens were done in compliance with Section 11 and Annex A1.

## EXAMPLES

### Raw Materials Used

"Carbowax" brand "Sentry" polyethylene glycol 1450, "Carbowax" brand "Sentry" polyethylene glycol 1000, and "Carbowax" brand "Sentry" polyethylene glycol 3350, were all obtained from Union Carbide Corporation.

4,4' diphenylmethane diisocyanate was obtained from ICI Polyurethanes as Rubinate 44.

1,4-Butanediol was obtained from DuPont Chemicals.

Hard segment content of the polymers is weight percent.

"Carbowax" brand "Sentry" polyethylene glycol 1450 had an average molecular weight of 1489.

### Example 1

### Preparation of MDI/PEG 1450/BD, 4:1:3 at 46% hard segment

### Prepolymer technique

A polymer of this invention was prepared from 144.9 grams (4 equivalents) of 4,4'-diphenylmethane diisocyanate, 215.8 grams (1 equivalent) polyethylene glycol having an average molecular weight of 1489 and 39.2 grams (3 equivalents) of 1,4-butanediol.

In preparation for this reaction the polyethylene glycol was degassed under vacuum for 2 hours at 100°C. It was blanketed with nitrogen then stored at 75°C until ready to use. The 4,4'-diphenylmethane diisocyanate was blanketed with nitrogen and stored at 40°C until melted and ready to use. A 1 liter jacketed reactor was purged with nitrogen and preheated to 50°C. The 4,4'-diphenylmethane diisocyanate was charged into the reactor and stirred. The polyethylene glycol was then also charged into the reactor with stirring and the temperature of the reactor was increased to 85°C. It was stirred for 2 hours under nitrogen. At the end of 2 hours the 1,4-butanediol was added all at once. The mixture was stirred vigorously for several minutes after which time the mixture began to thicken and the color turned from clear to white. The polymer, which was still pliable, was transferred to a metal container, blanketed with nitrogen and sealed.

Films were prepared by sheet extrusion or solution casting, and tested. Property values are set forth in Tables 1 and 2. MVTR of a 38.1 μm (1.5 mil) film was 9,000.

## Comparison Example A

### Preparation of MDI/PEG 1450/BDO, 4:2:2 at 28% hard segment

The reaction materials were prepared as described above. A metal container was selected as the reaction vessel and 286.48 grams (2 equivalents) of the liquid polyethylene glycol was weighed into the container followed by the addition of 17.32 grams (2 equivalents) 1,4-butanediol. The mixture was swirled to mix. 96.2 grams (4 equivalents) of the liquid 4,4'-diphenylmethane diisocyanate was quickly added. The container was held under an overhead stirrer and heated briefly with a heatgun. The mixture became very hot. It was blanketed with nitrogen and sealed. Films were cast using NMP or THF, but were sticky and unsuitable for measurement of tensile properties by the procedure described above. MVTR for a 25.4 µm (1 mil) film was 15,217.

**Comparison Example B**

Preparation of MDI/PEG 3350/BDO, 4:1:3 at 26% hard segment

The reaction materials were prepared as described above. A metal container was again selected as the reaction vessel and 239.3 grams (1 equivalent) of the liquid polyethylene glycol was weighed into the container, followed by the addition of 22.7 grams (3 equivalents) of the liquid 1,4-butanediol. The container was warmed with a heatgun and swirled to mix. 84.4 grams (4 equivaients) of 4,4'-diphenylmethane diisocyanate was added rapidly and the container was held under a mechanical stirrer. The mixture quickly became very hot. It was blanketed with nitrogen and the container was sealed.

Films were made as described in Comparison A. Test results are set forth in Tables 1 and 2. MVTR for 25.4 µm (1 mil) film was 25,238.

**Comparison Example C**

Preparation of MDI/PEG 1000/BDO, 4:1:3 at 55% hard segment

The reactants were prepared as described above. The reactor was purged with nitrogen and preheated to 50°C. A prepolymer was prepared by charging 176 grams (4 equivalents) of 4,4'-diphenylmethane diisocyanate into the reactor and then charging 177 grams (1 equivalent) of the liquid polyethylene glycol into the reactor with stirring. The reactor temperature was increased to 85°C and it was stirred for 2 hours under nitrogen. After 2 hours had elapsed, 47.5 grams (3 equivalents) 1,4-butanediol were quickly added. It was stirred vigorously and began to turn white and solidify quickly. It was transferred from the reactor to a metal container with some difficulty. The mixture was blanketed with nitrogen and sealed.

Films were made as described in Comparison A and test results are set forth in Tables 1 and 2. MVTR for a 96.52 µm (3.8 mil) film was 3428.

**Comparison Example D**

Preparation of 4:1.5:2.5, MDI/PEG 1000/BDO, 45% hard segment

One Shot method

The reaction materials were prepared as previously described. A metal can was again selected as the reaction vessel and 220.8 grams (1.5 equivalents) of the liquid polyethylene glycol was weighed into the can, followed by the addition of 32.8 grams (2.5 equivalents) of the liquid 1,4-butanediol. The can was warmed with a heatgun and swirled to mix. 146 grams (4 equivalents) of 4,4'-diphenylmethane diisocyanate was added rapidly and the can was held under a mechanical stirrer. The mixture quickly became very hot. It was blanketed with nitrogen and the can was sealed. Films were made as in Comparison A and tested. MVTR for a 20.32 µm (0.8 mil) film was 12,600.

**Comparison Example E**

Preparation of 4:1.5:2.5, MDI/PEG 1450/BDO, 36% hard segment

One-shot method

The reaction materials were prepared as previously described. A metal can was again selected as the reaction vessel and 258.4 grams (1.5 equivalents) of the liquid polyethylene glycol was weighed into the can, followed by the addition of 26.0 grams (2.5 equivalents) of the liquid 1,4-butanediol. The can was warmed with a heatgun and swirled to mix. 115.6 grams (4 equivalents) of 4,4'-diphenylmethane diisocyanate was added rapidly and the can was held under a mechanical stirrer. The mixture quickly became very hot. It was blanketed with nitrogen and the can was sealed. Films were made as described in Comparison A and tested. MVTR for a 50.8 µm (2 mil) film was 11,800.

## Comparison Example F

Preparation of 4:0.75:3.25, MDI/PEG 1450/BDO, 54% hard segment

One-shot method

The reaction materials were prepared as previously described. A metal can was again selected as the reaction vessel and 169 grams (0.75 equivalents) of the liquid polyethylene glycol was weighed into the can, followed by the addition of 43.8 grams (3.25 equivalents) of the liquid 1,4-butanediol. The can was warmed with a heatgun and swirled to mix. 151 grams (4 equivalents) of 4,-4'diphenylmethane diisocyanate was added rapidly and the can was held under a mechanical stirrer. The mixture quickly became very hot. It was blanketed with nitrogen and the can was sealed. Films were made as described in Comparison A and tested. MVTR for a 25.4 μm (1 mil) film was 6660.

TABLE 1 - TEST DATA ON TENSILE PROPERTIES

Example 1

| Formulation: 4:1:3, MDI: PEG 1450: BDO - 46% Hard Segment Solution cast film | | |
|---|---|---|
| | DRY | WET |
| Tensile Strength | $49.306 \frac{N}{mm^2}$ (7,151 psi) | $25.953 \frac{N}{mm^2}$ (3,764 psi) |
| Elongation | 580% | 539% |
| Toughness | 1335cm/g/cm$^3$ (14,550 in.per lb./in.$^3$) | 796 cm/g/cm$^3$ (8,678 in.per lb./in.$^3$) |

| Extruded batch of film - ANNEALED* | | |
|---|---|---|
| | DRY | WET |
| Tensile Srength | $85.222 \frac{N}{mm^2}$ (12,360psi) | $44.618 \frac{N}{mm^2}$ (6,471psi) |
| Elongation | 630% | 493% |
| Toughness | 3043 cm/g/cm$^3$ (33,160 in.per lb./in.$^3$) | 1485 cm/g/cm$^3$ (16,180 in.per lb./in.$^3$) |

*annealed for 2.5 h. @ 100°C, then 3 h. @ 320°C, then 17 h @ 90°C

| Extruded batch of film - NOT ANNEALED | | |
|---|---|---|
| | DRY | WET |
| Tensile Strength | $85.222 \frac{N}{mm^2}$ (12,360psi) | $29.600 \frac{N}{mm^2}$ (4,293psi) |
| Elongation | 502% | 540% |
| Toughness | 2261cm/g/cm$^3$ (24,640 in.per lb./in.$^3$) | 1155cm/g/cm$^3$ (12,590 in.per lb./in.$^3$) |

## Comparison Example A

Formuiation: 4:2:2, MDI: PEG 1450: BDO - 28% Hard Segment

Data unavailable, film was too sticky to remove from release surface and cut into ASTM specimens for testing.

Comparison Example B

| Formulation: 4:1:3, MDI: PEG 3350: BDO - 26% Hard Segment | | |
|---|---|---|
| | DRY | WET |
| Tensile Strength | 16.548 $\frac{N}{mm^2}$ (2,400 psi) | 1.772 $\frac{N}{mm^2}$ (257psi) |
| Elongation | 10.9% | 122.7% |
| Toughness | 11.5cm/g/cm$^3$ (125 in. per lb./in.$^3$) | 15.7cm/g/cm$^3$ (171 in.per lb./in.$^3$) |

Comparison Example C

| Formulation: 4:1:3, MDI: PEG 1000: BDO - 55% Hard Segment | | |
|---|---|---|
| | DRY | WET |
| Tensile Strength | 13.859 $\frac{N}{mm^2}$ (2,010psi) | 10.694 $\frac{N}{mm^2}$ (1,551psi) |
| Elongation | 301.2% | 139.9% |
| Toughness | 431 cm/g/cm$^3$ (4,697 in.per lb./in.$^3$) | 151 cm/g/cm$^3$ (1,640 in.per lb./in.$^3$) |

Comparison Example D

| Formulation: 4:1.5:2.5, MDI: PEG 1000: BDO - 45% Hard Segment | | |
|---|---|---|
| | DRY | WET |
| Tensile Strength | 10.977 $\frac{N}{mm^2}$ (1,592) | 10.205 $\frac{N}{mm^2}$ (1,480psi) |
| Elongation | 535% | 380% |
| Toughness | 476 cm/g/cm$^3$ (5.186 in.per lb./in.$^3$) | 451 m/g/cm$^3$ (4,919 in.per lb./in.$^3$) |

Comparison Example E

| Formulation: 4:1.5:2.5, MDI: PEG 1450: BDO - 36% Hard Segment | | |
|---|---|---|
| | DRY | WET |
| Tensile Strength | 1.241 $\frac{N}{mm^2}$ (180psi) | 2.365 $\frac{N}{mm^2}$ (343psi) |
| Elongation | 53% | 95% |
| Toughness | 12.8 cm/g/cm$^3$ (140 in.per lb./in.$^3$) | 108 cm/g/cm$^3$ (1,178 in. per lb./in.$^3$) |

Comparison Example F

| Formulation: 4:0.75:3.25, MDI: PEG 1450: BDO - 54% Hard Segment | | |
|---|---|---|
| | DRY | WET |
| Tensile Strength | $15.169\frac{N}{mm^2}$ (2,200psi) | $12.507\frac{N}{mm^2}$ (1,814psi) |
| Elongation | 380 | 280% |
| Toughness | 486 cm/g/cm$^3$ (5,300 in.per lb./in.$^3$) | 413 cm/g/cm$^3$ (4,500 in. per lb./in.$^3$) |

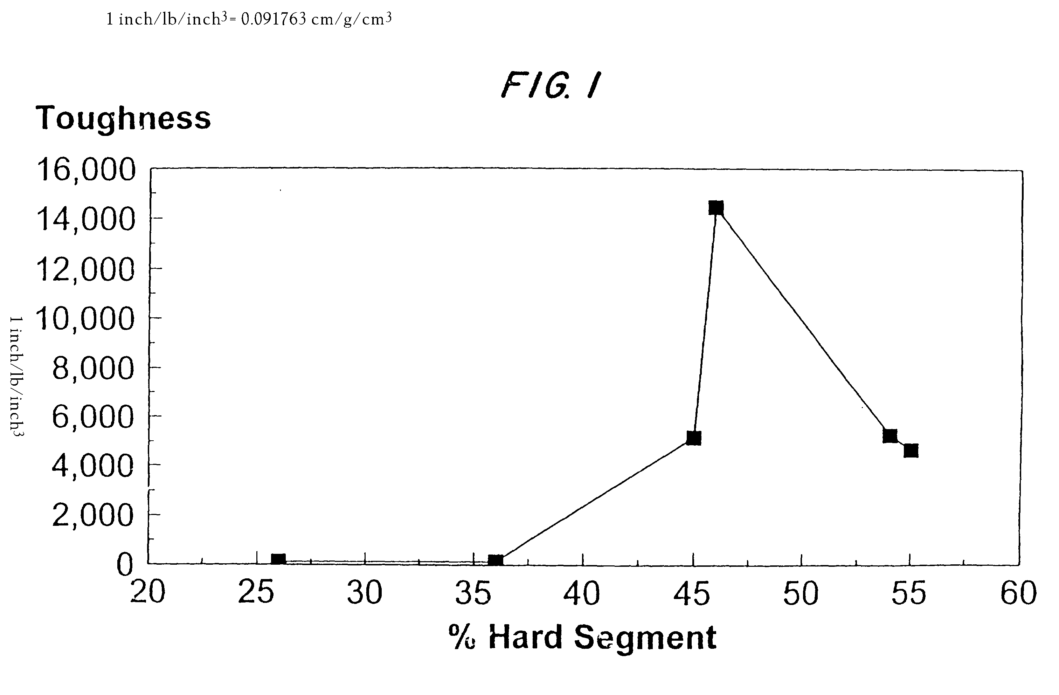

In Figures 1-3, the comparison data is plotted with Example 1 data to graphically show the differences. In Figure 1, the values for toughness versus percent hard segment is compared. The data shows the unexpected degree of toughness of 1335 cm/g/cm$^3$ (14,550 inch/lb./inch$^3$) for the Example 1 polymer.

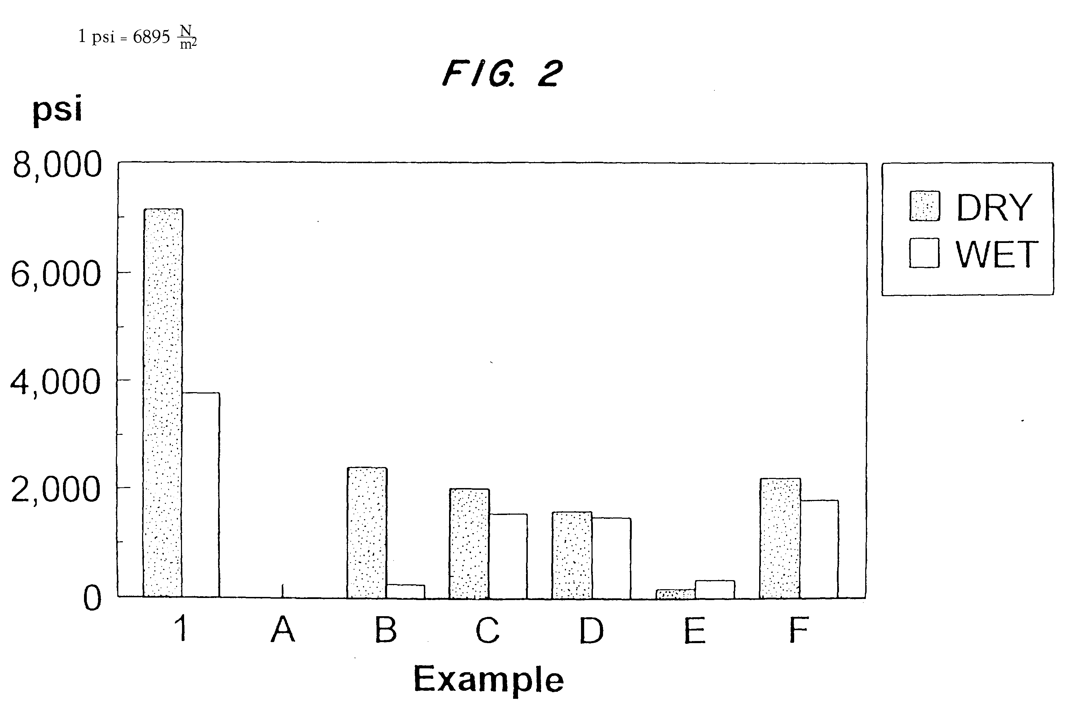

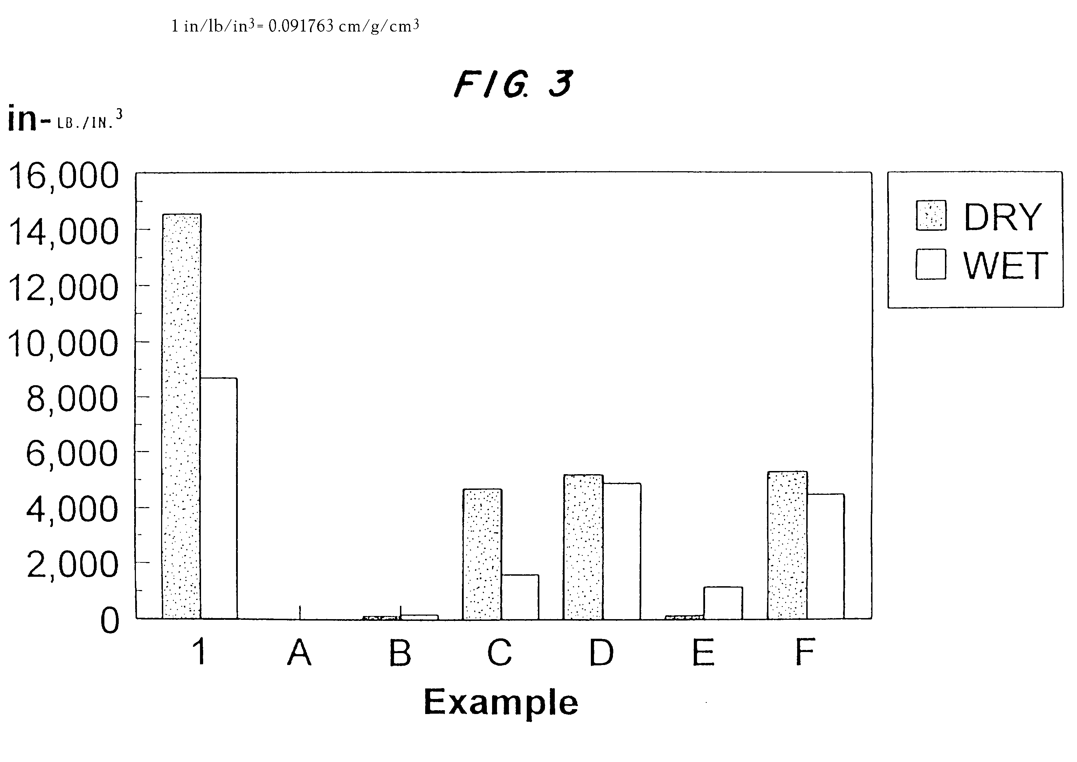

In Figure 2, a bar chart is shown which depicts the tensile strength values, dry and wet, for the Example 1 and the comparisons. In Figure 3, toughness values are depicted. In Figures 2 and 3 the dry strength is the first bar and wet strength is the adjacent bar to the immediate right. It is seen in the two charts that the Example 1 values for both dry and wet determinations are superior to the values of the comparisons. It is also seen that the Example 1 sample is stronger and tougher wet than are the comparison samples dry.

## TABLE 2 - TEST DATA ON SWELL

### Low Swell

The formulation of Example 1 has unexpectedly low swelling properties for a hydrophilic polyurethane. Swell was measured by using a 25.40 mm (1 inch) circular die to stamp out discs of film. The discs were then allowed to sit in a vacuum oven at ambient temperature to remove any moisture that may have been absorbed. The discs were then soaked in distilled water for 24 hours and then measured for size increase.

Example 1 - swell ranged from 7-18% (several samples)

Comparison Example A -37.5%

Comparison Example B - 50%

Comparison Example C - 8.3%

Comparison Example D - 6.25%

Comparison Example E - 25%

Comparison Example F - 6.25%

It is seen that Example 1 has the unique combination of properties:

- low swell
- excellent retention of tensile properties when wet
- excellent breathability
- high strength

## Claims

1.  A polyurethane comprising the reaction product of:

(a) 4,4'-diphenylmethane diisocyanate;
(b) polyoxyethylene glycol; and
(c) 1,4-butanediol

in which the equivalents of each reactant a), b) and c) in the reaction mixture are in the ratio 4:1:3, and the amount of a) and c) present is 46 weight percent of the total weight of the polyurethane.

2. A coated substrate comprising a coating formed of the polyurethane of Claim 1.

3. The coated substrate of Claim 2 wherein the substrate is a fabric.

4. The coated substrate of Claim 2 wherein the substrate is a film.

5. The coated substrate of Claim 2 wherein the substrate is a membrane.

6. A film formed from the polyurethane of Claim 1.

7. The film of claim 6 wherein the film is bonded to a substrate.

8. A method for producing the polyurethane of claim 1, characterized in that the polyurethane is prepared by the prepolymer procedure in which the reactants (a) and (b) are reacted to form a prepolymer and then reactant (c) is reacted with the prepolymer.

**Patentansprüche**

1. Polyurethan, aufweisend das Reaktionsprodukt von:

   (a) 4,4'-Diphenylmethan-diisocyanat;
   (b) Polyoxyethylen-glycol; und
   (c) 1,4-Butandiol

   bei dem die Äquivalente jedes Reaktanten a), b) und c) in dem Reaktionsgemisch im Verhältnis 4:1:3 sind, und die vorliegende Menge von a) und c) 46 Gew.-% des Gesamtgewichts des Polyurethans beträgt.

2. Beschichtetes Substrat, das eine aus dem Polyurethan gemäß Anspruch 1 gebildete Beschichtung aufweist.

3. Beschichtetes Substrat nach Anspruch 2, bei dem das Substrat ein Textilerzeugnis ist.

4. Beschichtetes Substrat nach Anspruch 2, bei dem das Substrat ein Film ist.

5. Beschichtetes Substrat nach Anspruch 2, bei dem das Substrat eine Membran ist.

6. Film, hergestellt aus dem Polyurethan gemäß Anspruch 1.

7. Film nach Anspruch 6, wobei der Film an ein Substrat gebunden ist.

8. Verfahren zur Herstellung des Polyurethans gemäß Anspruch 1, **dadurch gekennzeichnet**, daß das Polyurethan hergestellt wird mittels des Prepolymer-Verfahrens, bei dem die Reaktanten (a) und (b) zur Bildung eines Prepolymers zur Reaktion gebracht werden und dann Reaktant (c) mit dem Prepolymer zur Reaktion gebracht wird.

**Revendications**

1. Polyuréthanne comprenant le produit de réaction de :

   (a) diisocyanate de 4,4'-diphénylméthane;
   (b) polyoxyéthylèneglycol; et

(c) 1,4-butanediol dans lequel les équivalents de chaque réactif a), b) et
c) dans le mélange réactionnel sont dans le rapport 4:1:3, et la quantité de a) et c) présente est de 46 pour cent en poids du poids total du polyuréthanne.

2.  Substrat recouvert comprenant un revêtement constitué du polyuréthanne selon la revendication 1.

3.  Substrat recouvert selon la revendication 2, dans lequel le substrat est un tissu.

4.  Substrat recouvert selon la revendication 2, dans lequel le substrat est un film.

5.  Substrat recouvert selon la revendication 2, dans lequel le substrat est une membrane.

6.  Film constitué du polyuréthanne selon la revendication 1.

7.  Film selon la revendication 6 dans lequel le film est collé à un substrat.

8.  Procédé de production du polyuréthanne de la revendication 1, caractérisé en ce que le polyuréthanne est préparé par la procédure du prépolymère dans laquelle les réactifs (a) et (b) sont mis à réagir pour former un prépolymère et le réactif (c) est ensuite mis à réagir avec le prépolymère.

$1 \text{ inch/lb/inch}^3 = 0.091763 \text{ cm/g/cm}^3$

## FIG. I

**Toughness**

$$1 \text{ psi} = 6895 \frac{N}{m^2}$$

## FIG. 2

EP 0 778 855 B1

$1 \, in/lb/in^3 = 0.091763 \, cm/g/cm^3$

## FIG. 3

$in- _{LB./IN.}{}^3$

EP 0 778 855 B1